# EUROPEAN PATENT APPLICATION

(11) **EP 4 250 452 A1**
(43) Date of publication of application: **27.09.2023**
(21) Application number: 22785030.2
(22) Date of filing: 08.04.2022
(51) Int. Cl.: H01M 50/24, H01M 50/227, H01M 50/211, H01M 10/658, H01M 10/647, H01M 10/613

(54) **BATTERY PACK AND DEVICE INCLUDING SAME**

(30) Priority: 09.04.2021 KR 20210046488
(71) Applicant: LG Energy Solution, Ltd., Seoul 07335 (KR)
(72) Inventor: HONG, Soon Chang, Daejeon 34122 (KR); RHIM, Soeun, Daejeon 34122 (KR); YOO, Hyongseok, Daejeon 34122 (KR); LEE, Hyoungsuk, Daejeon 34122 (KR)
(74) Representative: Goddar, Heinz J.
(86) International application number: PCT/KR2022/005156
(87) International publication number: WO 2022/216122

(57) **Abstract**

A battery pack according to one embodiment of the present disclosure includes a battery modules including a plurality of battery cells; and a pack frame in which the battery modules are housed, wherein at least two battery modules gather to form a first battery module group, wherein at least two battery modules gather to form a second battery module group, wherein the second battery module group is located on an upper part of the first battery module group, wherein a partition member is arranged between the first battery module group and the second battery module group, and wherein the partition member comprises an insulating sheet having thermal insulation and electrical insulation.

## Description

### [TECHNICAL FIELD]

### Cross Citation with Related Application(s)

This application claims the benefit of Korean Patent Application No. 10-2021-0046488 filed on April 9, 2021 with the Korean Intellectual Property Office, the entire contents of which are incorporated herein by reference.

The present disclosure relates to a battery pack and a device including the same, and more particularly, to a battery pack having improved safety against flame generation, and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, a chargeable/dischargeable secondary battery is used as a power source for an electric vehicle (EV), a hybrid electric vehicle (HEV), a plug-in hybrid electric vehicle (P-HEV) and the like, as one method of solving air pollution and the like caused by existing gasoline vehicles using fossil fuel. Therefore, the need for developing the secondary battery has been increasing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle- or large-sized device such as an automobile, a battery module in which a large number of battery cells are electrically connected is used. In such a battery module, a large number of battery cells are connected to each other in series or parallel to form a cell assembly, thereby improving capacity and output. One or more battery modules can be mounted together with various control and protection systems such as a BMS (battery management system) and a cooling system to form a battery pack.

In the battery pack configured to gather a plurality of battery modules, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a thermal runaway phenomenon generated in any one of the battery modules can easily propagate to an adj acent battery module, which may eventually lead to ignition or explosion of the battery pack itself.

Therefore, there is a need to design a model that does not lead to fire or explosion of the battery pack itself, even if a thermal runaway phenomenon occurs in any one battery cell.

### [DETAILED DESCRIPTION OF THE INVENTION]

### [Technical Problem]

It is an object of the present disclosure to provide a battery pack that can prevent thermal runaway phenomenon from leading to fire or explosion, even if thermal runaway phenomenon occurs in any one battery cell.

However, the problem to be solved by embodiments of the present disclosure is not limited to the above-described problems, and can be variously expanded within the scope of the technical idea included in the present disclosure.

### [Technical Solution]

According to an aspect of the present disclosure, there is provided a battery pack comprising: a battery modules including a plurality of battery cells; and a pack frame in which the battery modules are housed, wherein at least two battery modules gather to form a first battery module group, wherein at least two battery modules gather to form a second battery module group, wherein the second battery module group is located on an upper part of the first battery module group, wherein a partition member is arranged between the first battery module group and the second battery module group, and wherein the partition member comprises an insulating sheet having thermal insulation and electrical insulation.

The partition member may cover the whole of the upper surface of the first battery module group.

The battery cells may be stacked along a direction parallel to the width direction while one surface of the cell body of the battery cell stands upright so as to be perpendicular to the bottom part of the pack frame.

The battery modules included in the first battery module group may be arranged in one row along the width direction.

The battery modules included in the second battery module group may be arranged in one row along the width direction.

The battery cell may be a pouch-type battery cell.

The insulating sheet may comprise a polymer resin.

The partition member may further comprise base plates, and the insulating sheet may be sandwiched between the base plates.

### [Advantageous Effects]

According to the embodiments of the present disclosure, even if a thermal runaway phenomenon occurs in any one battery cell, it is designed so that thermal propagation is sequentially performed, thereby preventing fires or explosions at the battery pack level.

In addition, a thermal insulating sheet is provided on the partition member that divides layers, so that heat propagation between layers can be suppressed, and eventually, fire or explosion at the battery pack level can be prevented.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a battery module and a connection member according to one embodiment of the present disclosure;
Fig. 2 is an exploded perspective view of the battery module of Fig. 1;
Fig. 3 is a perspective view of a battery cell included in the battery module of Fig. 2;
Fig. 4 is a cross-sectional view of a battery pack according to one embodiment of the present disclosure; and
Fig. 5 is a cross-sectional view schematically showing a state in which a thermal runaway phenomenon occurs in any one battery cell in the battery pack of Fig. 4.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

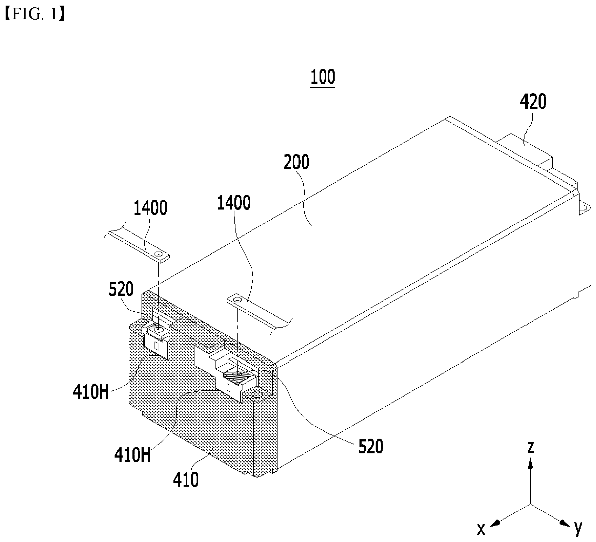

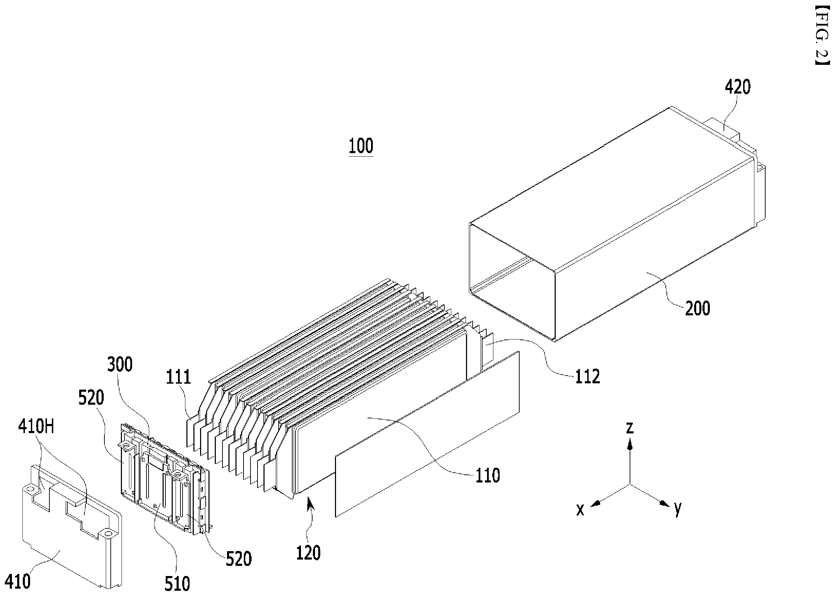

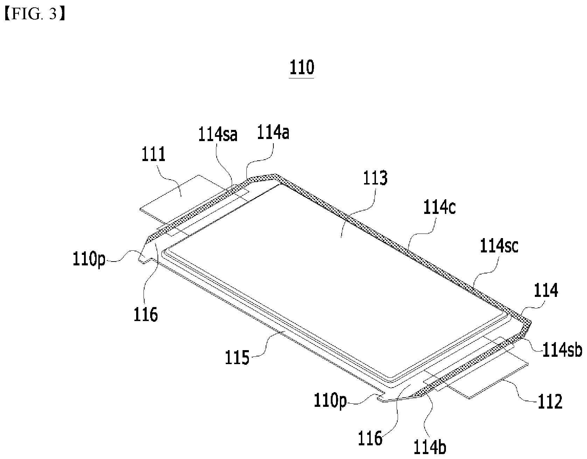

Fig. 1 is a perspective view showing a battery module and a connection member according to one embodiment of the present disclosure. Fig. 2 is an exploded perspective view of the battery module of Fig. 1. Fig. 3 is a perspective view of a battery cell included in the battery module of Fig. 2.

Referring to Figs. 1 to 3, the battery module 100 according to one embodiment of the present disclosure includes a plurality of battery cells 110. The battery cell 110 is preferably a pouch-type battery cell, and can be formed in a rectangular sheet-like structure. For example, the battery cell 110 according to the present embodiment has a structure in which two electrode leads 111 and 112 face each other and protrude on one side and the other side, respectively.

Particularly, referring to Fig. 3, the battery cell 110 according to the present embodiment has a structure in which two electrode leads 111 and 112 face each other and protrude from one end part 114a and the other end part 114b of the cell body 113, respectively. More specifically, the electrode leads 111 and 112 are connected to an electrode assembly (not shown), and are protruded from the electrode assembly (not shown) to the outside of the battery cell 110.

Meanwhile, the battery cell 110 can be manufactured by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a connection part 115. The cell case 114 may be composed of a laminated sheet including a resin layer and a metal layer.

Additionally, the connection part 115 may extend long along one edge of the battery cell 110, and a protrusion part 110p of the battery cell 110 called a bat-ear may be formed at an end part of the connection part 115. However, the protrusion part 110p is an exemplary structure, and the battery cell 110 according to another embodiment of the present disclosure may have a shape in which the protruding portion is not formed and the connection part 115 extends in a straight line.

In Fig. 3, only the battery cell 110 having a structure in which the electrode leads 111 and 112 protrude in both directions has been described, but as another embodiment of the present disclosure, it is, of course, possible to have a unidirectional pouch-type battery cell in which the electrode lead protrudes together in one direction.

Such a battery cell 110 may be composed by a plurality of numbers, and the plurality of battery cells 110 may be stacked so as to be electrically connected to each other, thereby forming a battery cell stack 120. In particular, as shown in Fig. 2, a plurality of battery cells 110 may be stacked along a direction parallel to the y-axis. Thereby, one electrode lead 111 of the battery cell 110 protrudes toward the x-axis direction, and another electrode lead 112 may protrude toward the -x-axis direction.

The battery cell stack 120 may be housed in the module frame 200. The module frame 200 may be a metal frame having a shape in which both surfaces are opened. More specifically, the module frame 200 may be opened in both directions in which the electrode leads 111 and 112 protrude with reference to the battery cell stack 120.

End plates 410 and 420 may be located on the opened both surfaces of the module frame 200. The two end plates 410 and 420 are referred to as a first end plate 410 and a second end plate 420, respectively. The end plates 410 and 420 may respectively cover the opened both surfaces of the module frame 200. The battery cell stack 120 is housed in the space formed by the module frame 200 and the end plates 410 and 420, thereby capable of physically protecting the battery cell stack 120. For this purpose, the module frame 200 and the end plates 410 and 420 may include a metal material having a predetermined strength such as aluminum or a plastic material. The module frame 200 and the end plates 410 and 420 can be joined by welding or the like in a state in which the corresponding corner portions come in contact with each other.

Meanwhile, the battery module 100 according to the present embodiment may further include a busbar frame 300 to which busbars 510 and terminal busbars 520 are mounted.

The busbar 510 and the terminal busbar 520 may be joined to the electrode leads 111 and 112 of the battery cell 110 to electrically connect the plurality of battery cells 110 to each other. Specifically, the busbar frame 300 to which the busbars 510 and the terminal busbars 520 are mounted may be located on one side (x-axis direction) and the other side (-x-axis direction) of the battery cell stack 120, respectively. In other words, any one busbar frame 300 may be located between any one of the end plates 410 and 420 and the battery cell stack 120. In Fig. 2, the illustration of the busbar frame located on the other side (-x-axis direction) of the battery cell stack 120 is omitted.

A lead slit may be formed at the busbar frame 300, and the electrode leads 111 and 112 can be bent after passing through the lead slit, and joined to the busbar 510 or the terminal busbar 520. As long as physical and electrical connection is possible, the joining method is not particularly limited, and weld-joining can be performed as an example.

Meanwhile, a portion of the terminal busbar 520 may be exposed to the outside of the battery module 100. Specifically, a first terminal busbar opening 410H is formed in the first end plate 410, and a portion of the terminal busbar 520 may be exposed. A portion of the exposed terminal busbar 520 may be connected to another battery module or a BDU (Battery Disconnect Unit) or the like and joined to the connection member 1400 in order to form a HV (High Voltage) connection as shown in Fig. 1. Here, the HV connection is a connection that serves as a power source for supplying power, and means a connection between battery cells or a connection between battery modules.

The material of the connection member 1400 is not particularly limited as long as it can be electrically connected, and a metal material can be applied.

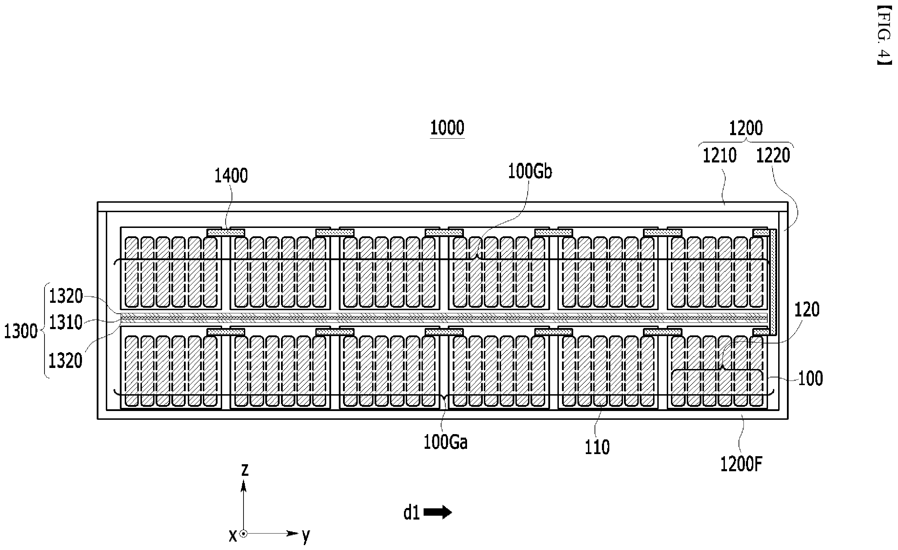

Next, the battery pack 1000 according to one embodiment of the present disclosure will be described in detail with reference to Fig. 4.

Fig. 4 is a cross-sectional view of a battery pack according to one embodiment of the present disclosure. Specifically, it shows a state in which a battery pack 1000, in which battery modules shown in Figs. 1 and 2 are housed in the pack frame, is cut along the yz plane.

Referring to Figs. 2 to 4, the battery pack 1000 according to one embodiment of the present disclosure includes a battery module 100 including a plurality of battery cells 110 and a pack frame 1200 housing the battery module 100. In this embodiment, the battery modules 100 may be the battery modules 100 shown in Fig. 1 and 2. In Fig. 4, the battery cells 110 included in the battery modules 100 are schematically represented by dotted lines for convenience of explanation. Further, the battery modules 100 may be electrically connected to each other through the connection member 1400 to form an HV connection. In Fig. 4, this connection member 1400 is schematically represented unlike Fig. 1.

The pack frame 1200 may include an upper frame 1210 and a lower frame 1220. The upper frame 1210 may have a plate-like shape, and the lower frame 1220 may include a bottom part 1200F on which the battery modules 100 are placed and may have an opened upper part. The upper frame 1210 is located on the opened upper part of the lower frame 1220, and the corresponding edges of the upper frame 1210 and the lower frame 1220 can be joined to complete the pack frame 1200. The space between the upper frame 1210 and the lower frame 1220 is a space in which the battery modules 100 are housed. However, the above structure is an exemplary structure of the pack frame 1200 according to the present embodiment, and of course, a modified form is possible as long as the battery module 100 can be housed.

At least two battery modules 100 are gathered inside the pack frame 1200 to form a first battery module group 100Ga, and at least two battery modules 100 are gathered to form a second battery module group 100Gb, wherein the second battery module group 100Gb is located above the first battery module group 100Ga. That is, the battery pack 1000 according to the present embodiment has a two-layer structure of a first battery module group 100Ga and a second battery module group 100Gb. However, this is an exemplary structure, and a battery pack having a multilayer structure of three or more layers is also possible.

Meanwhile, a partition member 1300 is arranged between the first battery module group 100Ga and the second battery module group 100Gb, and the partition member 1300 includes an insulating sheet 1310 having thermal insulation and electrical insulation. The insulating sheet 1310 will be described again below.

In the inside of the battery module 100, the battery cells 110 are stacked along the width direction d1 to form a battery cell stack. Specifically, the battery cells 110 may be stacked along a direction parallel to the width direction d1 while one surface of the cell body 113 (see Fig. 3) of the battery cell 110 stands upright so as to be perpendicular to the bottom part 1200F of the pack frame 1200. In the present disclosure, the width direction d1 is one of directions parallel to the ground surface or one surface of the bottom part 1200F of the pack frame 1200, namely, one of directions parallel to the xy plane.

At this time, the battery modules 100 included in the first battery module group 100Ga may be arranged in one row along the width direction d1, and the battery modules 100 included in the second battery module group 100Gb may be arranged in one row along the width direction d1. That is, the direction in which the battery modules 100 are arranged in the battery module groups 100Ga and 100Gb may coincide with the direction in which the battery cells 110 are stacked.

The partition member 1300 described above may have a plate-like shape and may cover the whole of the upper surface of the first battery module group 100Ga. The material of the insulating sheet 1310 included in the partition member 1300 is not particularly limited as long as it has thermal insulation and electrical insulation, and as an example, it may include a polymer resin. In addition, the insulating sheet 1310 may be an FRS pad as an example. The FRS pad is a commercially available product from MORGAN, which may include MICA and Superwool. The insulating sheet 1310 that is the FRS pad may have a thickness of 1 mm to 3 mm, and may have a thermal conductivity of 0.12 W/mK or more and 0.18 W/mK or less at a temperature range of 810 to 820 degrees Celsius.

The partition member 1300 may further include base plates 1320, and an insulating sheet 1310 may be sandwiched between the base plates 1320. In addition, the insulating sheet 1310 and the base plate 1320 may be attached with double-sided tape.

Due to the partition member 1300, the first battery module group 100Ga and the second battery module group 100Gb are spatially separated, and due to the insulating sheet 1310 included in the partition member 1300, the first battery module group 100Ga and the second battery module group 100Gb are thermally and electrically isolated from each other.

Next, advantages of the battery pack 1000 according to the present embodiment when a thermal runaway phenomenon occurs in battery cells will be described below with reference to Figs. 3 to 5.

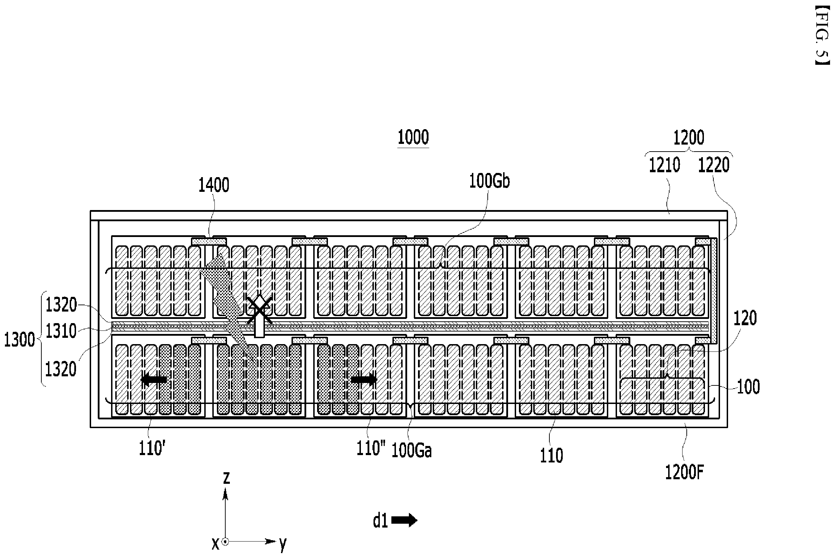

Fig. 5 is a cross-sectional view schematically showing a state in which a thermal runaway phenomenon occurs in any one battery cell in the battery pack of Fig. 4.

Referring to Figs. 3 to 5, a thermal runaway phenomenon may occur in any one of the battery cells 110 included in the battery module 1000 according to the present embodiment. One illustration of the thermal runaway phenomenon is as follows. Physical, thermal, and electrical damages to the battery cell 110, including overcharging, may occur and thus, the internal pressure of the battery cell 110 may increase. When the internal pressure exceeds the fusion strength limit value of the cell case 114 of the battery cell 110, high-temperature heat, venting gas, etc. generated from the battery cell 110 may be ejected to the outside of the battery cell 110.

The thermal runaway phenomenon generated in any one battery cell can spread to other battery cells by convection effect, and may spread to adjacent battery modules. In particular, due to the structure of battery packs in which battery modules are densely packed to increase space utilization, the thermal runaway phenomenon does not propagate to the battery modules sequentially, but the thermal runaway phenomenon occurs simultaneously and frequently in a plurality of densely packed battery modules. That is, the thermal runaway phenomenon, which starts from a battery cell and simultaneously and frequently spreads to several battery modules, leads to ignition and explosion of the battery pack itself, which causes serious problems.

However, in the battery pack 1000 according to the present embodiment, the partition member 1300 is arranged between the battery module groups 100Ga and 100Gb, and the battery modules 100 are arranged in one row within the battery module groups 100Ga and 100Gb, whereby propagation of the thermal runaway phenomenon is sequentially performed not only in the battery module 100 unit but also in the battery cell 110 unit. That is, as shown in Fig. 5, when a thermal runaway phenomenon occurs in a battery cell inside any one battery module of the first battery module group 100Ga, venting gas and heat may be sequentially propagated to adjacent battery cells 110. As an example, Fig. 5 shows a state in which the thermal runaway phenomenon propagates to the battery cell 110' of the battery module located on the leftmost side in the first battery module group 100Ga and the battery cell 110"of the battery module located third from the left in the first battery module group 100Ga.

In addition, the venting gas and heat cannot be immediately propagated to the second battery module group 100Gb by the partition member 1300 including the insulating sheet 1310 having thermal insulation properties. In the present embodiment, a thermal insulation structure is designed so that the thermal runaway phenomenon does not propagate beyond the HV connection order of the connection member 1400 between the battery module groups 100Ga and 100Gb.

By designing the sequential propagation as described above, the propagation time of venting gas and heat can be increased, and the intensity of thermal runaway can be gradually reduced in the process of sequential propagation. That is, in the battery pack 1000 according to the present embodiment, even if a thermal runaway phenomenon occurs in one of the battery cells 110, it can prevent the battery pack 1000 itself from leading to ignition or explosion. If the partition member 1300 is not provided, the thermal runaway phenomena started in any one battery cell 110 is immediately propagated to the battery module 100 in the other battery module group 100Gb, so that a large amount of venting gas and high-temperature heat are simultaneously discharged from several battery modules 100 for a short period of time. This is highly likely to lead to ignition and explosion of the battery pack 1000.

Meanwhile, as described above, in the present embodiment, the direction in which the battery modules 100 are arranged in the battery module groups 100Ga and 100Gb may coincide with the direction in which the battery cells 110 are stacked. Thereby, propagation of the thermal runaway phenomenon between the battery cells 110 within the battery module groups 100Ga and 100Gb may be sequentially performed. By matching the arrangement direction of the battery modules 100 and the stacking direction of the battery cells 110, propagation of the thermal runaway phenomenon is further delayed.

Meanwhile, although not specifically illustrated, there may be cases in which thermal runaway phenomenon occurs individually in each of the first battery module group 100Ga and the second battery module group 100Gb. In this case, since the insulating sheet 1310 has electrical insulation and thermal insulation properties, sequential propagation of the thermal runaway phenomenon occurs individually in each of the first battery module group 100Ga and the second battery module group 100Gb. The first battery module group 100Ga and the second battery module group 100Gb are electrically separated by the insulating sheet 1310 to prevent occurrence of sparks and short-circuits. Taken together, it is possible to prevent ignition and explosion of the battery pack 1000 by designing the thermal runaway phenomenon generated in each of the first battery module group 100Ga and the second battery module group 100Gb to propagate along separate paths. If the insulating sheet 1310 is not provided, the thermal runaway phenomenon generated in each of the first battery module group 100Ga and the second battery module group 100Gb is combined and spreads into one large thermal runaway phenomenon, and a large amount of venting gas and high-temperature heat is discharged from each battery pack, and the battery pack may eventually explode.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The battery pack according to the present embodiment described above may include not o only battery module but also various control and protection systems such as a BMS(battery management system), a BDU(battery disconnect unit), and a cooling system.

The battery pack can be applied to various devices. Specifically, it can be applied to vehicle means such as an electric bike, an electric vehicle, and a hybrid electric vehicle, and may be applied to various devices capable of using a secondary battery, without being limited thereto.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

1000: battery pack
100: battery module
100Ga: first battery module group
100Gb: second battery module group
1300: partition member
1310: insulating sheet

## Claims

1. A battery pack comprising:
a battery modules including a plurality of battery cells; and
a pack frame in which the battery modules are housed,
wherein at least two battery modules gather to form a first battery module group,
wherein at least two battery modules gather to form a second battery module group,
wherein the second battery module group is located on an upper part of the first battery module group,
wherein a partition member is arranged between the first battery module group and the second battery module group, and
wherein the partition member comprises an insulating sheet having thermal insulation and electrical insulation.

2. The battery pack according to claim 1, wherein:
the partition member covers the whole of an upper surface of the first battery module group.

3. The battery pack according to claim 1, wherein:
the battery cells are stacked along a direction parallel to a width direction while one surface of a cell body of the battery cell stands upright so as to be perpendicular to a bottom part of the pack frame.

4. The battery pack according to claim 3, wherein:
the battery modules included in the first battery module group are arranged in one row along the width direction.

5. The battery pack according to claim 3, wherein:
the battery modules included in the second battery module group are arranged in one row along the width direction.

6. The battery pack according to claim 1, wherein:
the battery cell is a pouch-type battery cell.

7. The battery pack according to claim 1, wherein:
the insulating sheet comprises a polymer resin.

8. The battery pack according to claim 1, wherein:
the partition member further comprises base plates, and
the insulating sheet is sandwiched between the base plates.

9. A device comprising the battery pack as set forth in claim 1.
